# FASCICULE DE BREVET EUROPEEN

(11) **EP 3 114 863 B1**
(45) Date de publication et mention de la délivrance du brevet: **06.05.2020**
(21) Numéro de dépôt: 15713982.5
(22) Date de dépôt: 05.03.2015
(51) Int. Cl.: H04W 4/02, H04W 36/00

(54) **DISPOSITIF DE GÉOLOCALISATION POUR UN SYSTÈME DE TÉLÉCOMMUNICATION**
GEOLOKALISIERUNGSVORRICHTUNG FÜR EIN TELEKOMMUNIKATIONSSYSTEM
GEOLOCATION DEVICE FOR A TELECOMMUNICATION SYSTEM

(30) Priorité: 06.03.2014 FR 1451822
(43) Date de publication de la demande: 11.01.2017
(73) Titulaire: Intersec, 92085 Paris La Defense Cedex (FR)
(72) Inventeur: COIC, Jean-Marc, F-92340 Bourg la Reine (FR); NEZ, Christophe, F-75010 Paris (FR)
(74) Mandataire: Cabinet Netter
(86) Numéro de dépôt international: PCT/FR2015/050544
(87) Numéro de publication internationale: WO 2015/132533

(56) Documents cités:
- EP-A1- 2 595 418
- US-A1- 2006 003 775
- US-A1- 2011 134 240

## Description

L'invention concerne un dispositif de géolocalisation pour un système de télécommunication.

Les téléphones mobiles sont devenus des objets utilisés par l'ensemble de la population. De fait, toutes les personnes en âge de consommer ont un téléphone portable. Cela signifie qu'il est maintenant possible pour toutes les entreprises, et en particulier les magasins, de communiquer avec leurs clients et prospects.

De nombreuses initiatives ont été prises en ce sens, avec par exemple l'envoi de campagnes de SMS promotionnels pour attirer les consommateurs sur le point de vente. Cependant, ces campagnes, à l'image des prospectus dans les boîtes aux lettres, ont un rendement faible car elles sont peu ciblées et ne tiennent pas compte du consommateur.

D'autres initiatives ont vu le jour pour mieux prendre en compte le consommateur. Ainsi, il a été constaté qu'un SMS publicitaire ou portant une promotion avait plus de chance d'aboutir si le consommateur est à proximité du lieu de vente. Or les téléphones mobiles des consommateurs sont de bons indicateurs de leur position. Des méthodes de géolocalisation ont donc été développées.

Ces méthodes ont repris les grands principes du « gardiennage virtuel » (ou « geofencing » en anglais) : si un consommateur pénètre dans une zone proche d'un point de vente, un SMS promotionnel lui est envoyé.

Le document US2006 / 0003775 de la technique antérieure décrit un système de localisation sans fil pour localiser un dispositif sans fil fonctionnant dans une zone géographique desservie par un système de communication sans fil. Ce document décrit uniquement une construction spécifique de cellules de communication qui est inexploitable industriellement et ne peut donc pas être interprétée comme englobant l'invention.

Cependant, de nombreux obstacles ont été rencontrés.

En effet, les méthodes de gardiennage virtuel classiques portent en général sur un nombre restreint d'éléments à surveiller, qui sont d'ailleurs identifiés. Un suivi actif de localisation des éléments à surveiller est réalisé, c'est-à-dire que le réseau de télécommunication reçoit des requêtes régulières pour indiquer la localisation précise d'un nombre restreint d'appareils. Dans le cas présent, cette méthode ne peut pas fonctionner car le nombre de consommateurs est très important, et leurs appareils mobiles ne sont pas connus a priori. De plus, le réseau de télécommunication ne peut pas fournir la position de chacun de ses utilisateurs à chaque instant.

D'autres méthodes ont été retenues, basées sur la collecte passive d'informations transmises par le téléphone mobile dans son fonctionnement et collectées au niveau du réseau. Cependant, cette méthode a un taux de succès faible, car l'entrée du consommateur dans le périmètre d'intérêt est détecté trop tard, et car l'émission de ces informations est irrégulière. Ainsi, de nombreux consommateurs potentiels sont ignorés par ces méthodes.

L'invention vient améliorer la situation. À cet effet, il est proposé un dispositif de géolocalisation comprenant :
un requêteur agencé pour obtenir des données de signalisation associant des identifiants de dispositif mobile de communication et des identifiants de signalisation, certains au moins des identifiants de signalisation désignant une cellule de localisation,
un sélecteur agencé pour déterminer une liste de cellules de localisation voisines d'une cellule de localisation cible, à partir de l'ensemble des cellules situées à une distance choisie de la cellule de localisation cible, la distance choisie étant définie de manière métrique ou en fonction de la topologie du réseau de cellules,
un trieur agencé pour sélectionner dans les données du requêteur au moins un identifiant de dispositif mobile de communication détecté comme associé à un identifiant de signalisation concernant une cellule de localisation appartenant à la liste de cellules de localisation voisines déterminée par le sélecteur, et
un traqueur agencé pour déclencher un suivi actif de cellule de localisation d'un dispositif mobile de communication dont l'identifiant de dispositif mobile a été sélectionné par le trieur.

Ce dispositif est très avantageux car il permet de réduire l'utilisation du suivi actif, qui consomme une grande quantité de ressources matérielles et empêche la pratique de gardiennage virtuel sur des populations importantes (en particulier des populations a priori indéterminées), en utilisant un suivi passif qui présente lorsqu'il est utilisé seul des performances insuffisantes.

Dans certaines variantes, le dispositif pourra présenter une ou plusieurs des caractéristiques suivantes :
- le sélecteur est agencé pour déterminer la liste de cellules de localisation voisines à partir de l'ensemble des cellules appartenant à la même zone de localisation ou la même zone de routage que la cellule de localisation cible,
- le traqueur est agencé pour réaliser un suivi actif de cellule de localisation d'un dispositif mobile de communication dont l'identifiant de dispositif mobile a été sélectionné par le trieur selon une fréquence dépendant de la distance entre une cellule de localisation courante et la cellule de localisation cible,
- le traqueur est en outre agencé pour ajuster la fréquence de suivi actif en fonction d'une vitesse estimée du dispositif,
- le traqueur est agencé pour réaliser un suivi actif de cellule de localisation d'un dispositif mobile de communication dont l'identifiant de dispositif mobile a été sélectionné par le trieur selon une fréquence dépendant d'une vitesse estimée du dispositif, et
- le traqueur est agencé pour ajuster la fréquence de suivi actif lorsque des données de signalisation concernant un identifiant de dispositif mobile sélectionné par le trieur sont reçues entre deux occurrences de suivi actif.

L'invention concerne également un procédé de géolocalisation comprenant :
a) recevoir des données de signalisation associant au moins un identifiant de dispositif mobile de communication et un identifiant de signalisation désignant une cellule de localisation,
b) déterminer si des données de signalisations reçues désignent une cellule de localisation appartenant à une liste de cellules de localisation voisines d'une cellule de localisation cible, situées à une distance choisie de la cellule de localisation cible, la distance choisie étant définie de manière métrique ou en fonction de la topologie du réseau de cellules,
c) en réponse à une détermination positive à l'étape b), réaliser un suivi actif de cellule de localisation d'un dispositif mobile de communication dont l'identifiant de dispositif mobile est associé aux données de localisation concernées.

En variante la liste de cellules de localisation voisines comprend uniquement des cellules appartenant à la même zone de localisation ou la même zone de routage que la cellule de localisation cible.

D'autres caractéristiques et avantages de l'invention apparaîtront mieux à la lecture de la description qui suit, tirée d'exemples donnés à titre illustratif et non limitatif, tirés des dessins sur lesquels :
- la figure 1 représente un diagramme schématique d'un dispositif selon l'invention dans son environnement de fonctionnement,
- la figure 2 représente une fonction mise en œuvre par le dispositif de la figure 1,
- la figure 3 représente un exemple de réalisation d'une opération de la figure 2, et
- la figure 4 représente un autre exemple de réalisation de l'opération de la figure 2.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

La présente description est de nature à faire intervenir des éléments susceptibles de protection par le droit d'auteur et/ou le copyright. Le titulaire des droits n'a pas d'objection à la reproduction à l'identique par quiconque du présent document de brevet ou de sa description, telle qu'elle apparaît dans les dossiers officiels. Pour le reste, il réserve intégralement ses droits.

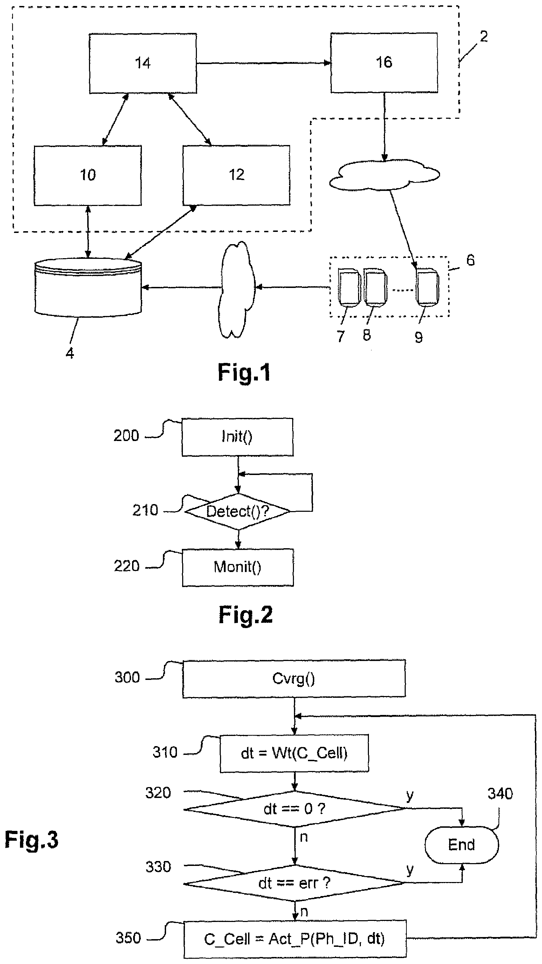

La figure 1 représente un diagramme schématique d'un dispositif selon l'invention dans son environnement. Comme cela apparaîtra, le dispositif 2 est particulièrement adapté à la géolocalisation par gardiennage virtuel d'une grande quantité de dispositifs mobiles de communication dont la position est inconnue a priori.

Le dispositif 2 interagit avec un stockage 4 et avec une pluralité de dispositifs mobiles de communication 6.

Dans l'exemple décrit ici, le stockage 4 appartient à un opérateur de téléphonie mobile (que ce soit en GSM, GPRS, EDGE, UMTS, LTE, ou leur évolution, ou encore un réseau WiFi étendu de type « hotspot »). Le stockage 4 contient l'ensemble des données de signalisation et d'activité d'une, plusieurs ou toutes les zones géographiques desservies par l'opérateur. Le stockage 4 peut être directement accessible ou déporté, réparti sur un ou plusieurs sites, correspondre à l'agrégation de plusieurs stockages distincts, y compris appartenant à plusieurs opérateurs mettant leurs ressources en commun.

Dans l'exemple décrit ici, la pluralité de dispositifs mobiles de communication 6 comprend plusieurs téléphones mobiles dont trois sont référencés respectivement 7, 8 et 9. D'une manière générale, tout dispositif se connectant à un réseau de téléphonie mobile GSM, GPRS, EDGE, UMTS, LTE ou leur évolution ou à un réseau WiFi étendu de type « hotspot » peut être considéré comme étant un dispositif mobile de communication 6.

Le dispositif 2 comprend un requêteur 10, un sélecteur 12, un trieur 14 et un traqueur 16. Chacun de ces éléments peut être réalisé sous la forme d'un appareil indépendant. Certains de ces éléments - tous dans l'exemple décrit ici - peuvent être également réunis en un seul appareil. Ces éléments peuvent être matériels ou logiciels.

Le dispositif 2, et le stockage 4 d'une part, et la pluralité de dispositifs mobiles de communication 6 d'autre part, sont reliés par des nuages non référencés sur la figure 1. Ces nuages symbolisent le fait que les connexions sont sans fil. Ils symbolisent également l'ensemble de l'infrastructure nécessaire à ces connexions.

Comme on le verra dans ce qui suit, le dispositif 2 met en œuvre une stratégie de géolocalisation à deux étapes pour réaliser un gardiennage virtuel efficace d'une grande quantité de dispositif mobiles de communication inconnus a priori.

Cette stratégie consiste à définir une zone large qui entoure la zone d'intérêt. Dans la zone large, la surveillance est basée sur des informations passives et disponibles en permanence. Lorsqu'un dispositif mobile pénètre cette zone, il est identifié, et le dispositif 2 met alors en place un suivi actif du dispositif identifié, jusqu'à ce que celui-ci sorte de la zone large ou qu'il pénètre la zone d'intérêt.

Ainsi, il devient possible d'utiliser les téléphones mobiles pour des opérations de marketing par gardiennage virtuel autour de lieux choisis comme des enseignes. Lorsqu'un dispositif identifié pénètre la zone d'intérêt, un SMS ou autre message peut lui être envoyé pour lui proposer une promotion dans l'enseigne dont il est proche, favorisant ainsi une vente qui n'aurait probablement pas eu lieu en d'autres circonstances.

Dans ce qui suit, la zone d'intérêt est décrite comme étant une cellule de localisation dite cible. En variante, la zone d'intérêt peut être définie comme une pluralité de cellules de localisation. Cette définition ne change pas la manière dont est définie la zone large, qui peut être adaptée en conséquence.

Le requêteur 10 a pour fonction la récupération des données de signalisation dans le stockage 4. Cette récupération peut être active, c'est-à-dire que le requêteur 10 sollicite l'accès au stockage 4 (« pull »), ou passive, c'est-à-dire que le requêteur 10 définit avec le réseau de l'opérateur un processus de communication de sorte que le requêteur 10 reçoit les données de manière automatique (« push »).
Par récupération passive, on entend le fait que la collecte des positions des utilisateurs au moyen de données de signalisation se fait sans nécessiter la génération de signalisation spécifique sur le réseau, par opposition à la récupération active, qui est réalisée par des requêtes spécifiques ou suivi actif comme expliqué plus bas.

Les données de signalisation sont stockées sous forme de couples associant un identifiant de signalisation (associé à un évènement de signalisation) et un identifiant de dispositif mobile de communication, chacun de ces couples désignant une cellule de localisation. Cette association peut être implicite ou explicite, par le biais d'identifiants, de couples ou de triplets. Le terme identifiant est ici utilisé dans son sens le plus large. Ainsi les données brutes peuvent elles-mêmes constituer un identifiant.

Les évènements de signalisation comprennent par exemple, pour un réseau à commutation de circuit : «IMSI attach/detach », « SMS MO/MT », « Call MO/MT », « Location update », « Network lost ».

Les évènements de signalisation comprennent par exemple, pour un réseau à commutation de paquet : « Data session initiation/authentication », « Data session interruption », « Routing Area Update ».

Le sélecteur 12 a pour fonction l'accès à des données de cartographie, par exemple la cartographie des cellules entourant la cellule de localisation dite cible qui contient l'enseigne visée. Le sélecteur 12 est agencé pour définir la zone large sous la forme d'une liste de cellules voisines entourant la cellule de localisation cible. Dans l'exemple décrit ici, cela est réalisé par accès au stockage 4 qui comprend la cartographie de l'opérateur. En variante, cela peut être réalisé par d'autres moyens. En variante, la liste de cellules de localisation voisines est connue et stockée dans une table à laquelle le sélecteur 12 accède. Dans encore une autre variante, le sélecteur 12 contient la cartographie des installations de l'opérateur et/ou la définition de la zone large.

Le trieur 14 a pour fonction le croisement des données du requêteur 10 avec les données du sélecteur 12, afin de détecter les dispositifs mobiles de communication qui pénètrent dans la zone large. Dans l'exemple décrit ici, le téléphone 9 a été détecté comme ayant pénétré la zone large.

Le traqueur 16 a pour fonction le suivi actif des dispositifs mobiles de communication identifiés par le trieur 14 comme ayant pénétré la zone large. Dans l'exemple décrit ici, le traqueur 16 interagit avec l'infrastructure de l'opérateur conformément aux fonctions décrites plus bas pour réaliser le suivi. En variante, le traqueur 16 peut être un simple relai des identifiants de ces dispositifs vers un traqueur propre à l'opérateur.

La figure 2 représente un exemple d'une fonction mise en œuvre par le dispositif 2.

Dans une première opération 200, le dispositif 2 initialise le gardiennage virtuel. Ainsi, pour une surveillance donnée, le sélecteur 12 est appelé dans une fonction Init() pour déterminer la liste de cellules de localisation voisines et la cellule de localisation cible.

Dans l'exemple décrit ici, le sélecteur 12 opère en définissant la liste de cellules de localisation voisines comme étant :
- l'ensemble des cellules appartenant à la zone de localisation (« Location Area » en anglais) à laquelle appartient la cellule de localisation cible si le réseau est à commutation de circuit, et
- l'ensemble des cellules appartenant à la zone de routage (« Routing Area » en anglais) à laquelle appartient la cellule de localisation cible si le réseau est à commutation de paquet.

Ces ensembles de cellules sont pertinents lorsque les données de signalisation de type « Location Update » ou « Routing Area Update » sont accessibles. En effet, lorsque ces données sont disponibles, l'émission de données de signalisation correspondantes indique par définition la pénétration dans la zone large. Dans le cas où la zone d'intérêt comprend plusieurs cellules de localisation cibles, la zone large correspond à l'agrégation des zones de localisation ou de routage correspondantes.

En variante, si les données de signalisation de type « Location Update » ou « Routing Area Update » ne sont pas accessibles, le sélecteur 12 peut opérer en sélectionnant toutes les cellules de localisation qui entourent la cellule de localisation cible, et dont au moins une partie est située dans un rayon choisi entourant le centre de la cellule de localisation cible, par exemple 3 km. Toujours en variante, la liste de cellules de communication voisines peut comprendre les voisins de la cellule de localisation cible au sens topologique du terme, c'est-à-dire l'ensemble des cellules qui peuvent être atteintes par déplacement contigu en 3 ou 4 déplacements ou moins. Dans le cas où la zone d'intérêt comprend plusieurs cellules de localisation cibles, la zone large peut être calculée de manière similaire.

Toujours en variante, le sélecteur 12 peut opérer en combinant ces deux variantes, c'est-à-dire en sélectionnant comme cellules de localisation voisines les cellules de localisation qui entourent la cellule de localisation cible et qui appartiennent à la même zone de localisation ou la même zone de routage que la cellule de localisation cible, et qui sont également situées dans un rayon choisi entourant le centre de la cellule de localisation cible. Ainsi, les deux filtres de sélection des cellules voisines se complètent pour écarter les cellules de localisation qui sont dans la même zone de localisation ou la même zone de routage qui seraient trop distantes de la cellule de localisation cible pour des raisons de topologie du réseau.

En outre, la fonction Init() peut également prévoir un appel au requêteur 10 pour déterminer si certains dispositifs mobiles de communication sont présents dans la cellule de localisation cible afin de communiquer directement avec ceux-ci.

Après l'exécution de la fonction Init(), une boucle est lancée dans une opération 210. Dans cette opération, une fonction Detect() est exécutée par le trieur 14 pour croiser les données récoltées par le requêteur 10 et la liste des cellules de localisation voisines déterminée par le sélecteur 12.

Dans l'exemple décrit ici, il s'agit de déterminer si un identifiant de signalisation désignant une des cellules de localisation de la liste de cellules de localisation voisines est présent. En effet, si un tel identifiant est présent, alors l'identifiant de dispositif mobile associé indique un dispositif mobile de communication qui a pénétré dans la zone large.

En variante, la fonction Detect() n'est pas réalisée sous forme d'une boucle. Le dispositif 2 est agencé pour recevoir du stockage 4 les informations de signalisation de manière passive (en « push »), et la fonction Detect() est lancée à chaque réception de données de signalisation.

Lorsque le trieur 12 détermine qu'un dispositif mobile de communication a pénétré la zone large, une fonction Monit() est lancée dans une opération 220.

La figure 3 représente un exemple de mise en œuvre de la fonction Monit() de l'opération 220. Dans cette fonction, la variable Ph_ID désigne l'identifiant du dispositif mobile de communication identifié dans l'opération 210, et la variable C_Cell est initialisée avec l'identifiant de la cellule dans laquelle ce dispositif était localisé lors de la détection.

La fonction Monit() commence par une opération 300 dans laquelle une fonction Cvrg() est appelée. La fonction Cvrg() a pour rôle de calculer une cartographie de suivi actif au sein de la zone large. Cette cartographie a pour but d'adapter la fréquence de suivi actif en fonction de la distance entre la position détectée du dispositif et la cellule cible.

En effet, la grande majorité des personnes utilisent leur téléphone portable en marchant, et se déplacent à une vitesse moyenne de 4 km/h. Il est donc inutile de réaliser un suivi actif toutes les cinq minutes si la cellule cible est à une distance de plusieurs kilomètres par exemple. Ainsi, la fonction Cvrg() part de la cellule cible, et affecte à chaque cellule dont la distance à la cellule cible est comprise dans une plage donnée un délai. Ce délai correspond à l'espacement temporel entre deux suivis actifs. Par exemple, le délai peut être de 2 minutes pour les cellules situées à moins de 500m de la cellule cible, 10 minutes pour les cellules comprises entre 1 et 2 km de la cellule cible, 40 minutes pour les cellules comprises entre 2 et 5 km de la cellule cible etc. En variante, ces valeurs sont fixées a priori, et la fonction Cvrg() accède à la table ou à l'enregistrement correspondant.

Une fois l'opération 300 terminée, une variable dt correspondant au délai pour la position en cours est calculé au moyen d'une fonction Wt() qui reçoit la variable C_Cell en argument. La fonction Wt() utilise l'identifiant de cellule C_Cell pour déterminer le délai correspondant qui lui a été associé par la fonction Cvrg(). En variante, la fonction Wt() peut vérifier si des données de signalisation concernant le dispositif ont été reçues depuis la dernière requête de suivi actif. Si c'est le cas, alors un délai correspondant à la différence entre la date de réception de ces données et la date de dernière requête de suivi actif peut être ajouté à la valeur de la variable dt.

Ensuite, deux tests sont réalisés dans des opérations 320 et 330 pour déterminer s'il doit être mis fin au suivi actif. En effet, si la variable dt vaut 0, alors le dispositif est dans la zone cible, et il faut exécuter l'action prévue. À l'inverse, si le dispositif est sorti de la zone large, alors la variable dt reçoit la valeur err, qui indique que la cellule C_Cell n'a pas été trouvée dans la liste issue de l'opération 300. Là encore, il convient de mettre fin au suivi actif, puisque le dispositif n'est plus dans la zone large. Dans ces deux cas, la fonction Monit() prend fin dans une opération 340.

Dans le cas où aucune des deux conditions de sortie n'est remplie, la fonction Monit() se prolonge dans une opération 350, dans laquelle une fonction Act_P() met à jour la variable C_Cell. La fonction Act_P() reçoit comme argument la variable dt, ainsi que l'identifiant Ph_ID. Elle exécute une boucle d'attente dont la durée correspond au délai de la variable dt, puis elle lance une procédure de suivi actif du dispositif ayant l'identifiant Ph_ID pour mettre à jour la cellule courante C_Cell.

Enfin, la boucle reprend avec l'opération 310 et le calcul d'un nouveau délai adapté à la cellule courante C_Cell mise à jour.

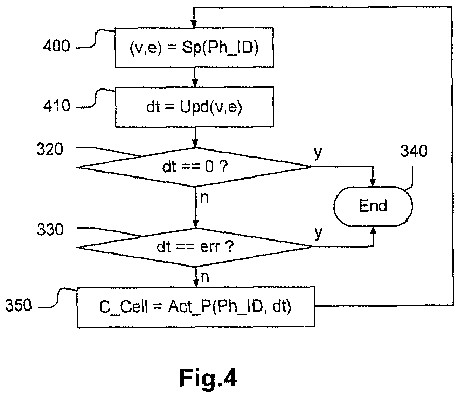

La figure 4 représente un exemple de mise en œuvre en variante de la fonction Monit() de l'opération 220.
Dans cette variante, les opérations 320 à 350 sont inchangées. La principale différence est que dans cette variante, un vecteur vitesse de déplacement du dispositif et une erreur correspondante sont déterminés afin de faire varier le délai dt.

Pour cela, dans une opération 400, le traqueur 12 détermine une vitesse courante v et une erreur correspondante e au moyen d'une fonction Sp() qui reçoit l'identifiant Ph_ID comme argument. Cette détermination peut être mise en œuvre par comparaison des positions déterminées dans un passé récent, ainsi que par intégration d'un historique de déplacement du dispositif. Ainsi, sur les trajets fréquents, il est possible d'améliorer la précision.

Après l'opération 400, la variable dt est mise à jour par une fonction Upd() dans une opération 410, en utilisant comme arguments la vitesse v et l'erreur e déterminées dans l'opération 400. Ainsi, lorsque le vecteur vitesse indique un rapprochement du dispositif par rapport à la cellule cible, le délai dt peut être diminué, afin d'augmenter la précision. Inversement, si le vecteur vitesse indique un éloignement par rapport à la cellule cible, le délai dt peut être augmenté. L'augmentation/la diminution du délai peut également dépendre de la magnitude de la vitesse, de l'erreur estimée, ainsi que de la distance entre la cellule courante et la cellule cible. Une fois les tests de sorties réalisés et la cellule courante mise à jour dans l'opération 350, la boucle reprend avec l'opération 400.

Les variantes des figures 3 et 4 peuvent être combinées. Par exemple, il est possible de déterminer un délai dt en fonction de la cellule courante, puis d'ajuster plus finement celui-ci en fonction de la vitesse estimée. En outre, en fonction de la vitesse, il est possible de déterminer que le porteur du dispositif a changé de mode de transport, et la fonction Cvrg() peut être exécutée à nouveau pour tenir compte de la nouvelle vitesse, et offrir une cartographie de suivi actif plus adaptée.

Dans ce qui précède, de nombreuses fonctions ont été décrites en rapport à des exemples particuliers. Il convient de noter que ces fonctions peuvent être mises en œuvre de diverses manières, notamment être scindées ou regroupées entre elles, certaines opérations peuvent être rendues optionnelles. De même, certaines des fonctions décrites plus haut peuvent être combinées entre elles, certaines variables remplacées. La portée de la présente vise l'ensemble de ces variantes, décrites explicitement ou implicitement.

Enfin, certaines fonctions ont été décrites selon un paradigme de type «push» ou « pull ». Lorsqu'un seul paradigme a été évoqué, cela ne signifie pas pour autant que l'autre paradigme ne rentre pas dans la portée de l'invention, et l'homme du métier devrait considérer la mise en œuvre de cet autre paradigme, sauf contradiction manifeste avec les principes de l'invention.

Au vu de ce qui précède, il apparaît que l'invention permet de réaliser une offre de services localisés basés sur un gardiennage virtuel pour une population extrêmement large et inconnue a priori, ce qui n'était pas possible jusqu'à présent.

## Revendications

1. Dispositif de géolocalisation pour réaliser un gardiennage virtuel des dispositifs mobiles de communications comprenant :
un requêteur (10) agencé pour obtenir des données de signalisation associant des identifiants de dispositif mobile de communication (6) et des identifiants de signalisation, certains au moins des identifiants de signalisation désignant une cellule de localisation,
un sélecteur (12) agencé pour déterminer une liste de cellules de localisation voisines d'une cellule de localisation cible à partir de l'ensemble des cellules situées à une distance choisie de la cellule de localisation cible, la distance choisie étant définie de manière métrique ou en fonction de la topologie du réseau de cellules,
un trieur (14) agencé pour sélectionner dans les données du requêteur (10) au moins un identifiant de dispositif mobile de communication (9) détecté comme associé à un identifiant de signalisation concernant une cellule de localisation appartenant à la liste de cellules de localisation voisines déterminée par le sélecteur (12), et
un traqueur (16) agencé pour déclencher un suivi actif de cellule de localisation de chacun des au moins un dispositif mobile de communication (9) dont l'identifiant de dispositif mobile a été sélectionné par le trieur (14).

2. Dispositif selon la revendication 1, dans lequel le sélecteur (12) est agencé pour déterminer la liste de cellules de localisation voisines à partir de l'ensemble des cellules appartenant à la même zone de localisation ou la même zone de routage que la cellule de localisation cible.

3. Dispositif selon l'une des revendications précédentes, dans lequel le traqueur (16) est agencé pour réaliser un suivi actif de cellule de localisation d'un dispositif mobile de communication (9) dont l'identifiant de dispositif mobile a été sélectionné par le trieur (14) selon une fréquence dépendant de la distance entre une cellule de localisation courante et la cellule de localisation cible.

4. Dispositif selon la revendication 3, dans lequel le traqueur (16) est en outre agencé pour ajuster la fréquence de suivi actif en fonction d'une vitesse estimée du dispositif.

5. Dispositif selon la revendication 1 ou 2, dans lequel le traqueur (16) est agencé pour réaliser un suivi actif de cellule de localisation d'un dispositif mobile de communication (6) dont l'identifiant de dispositif mobile a été sélectionné par le trieur (14) selon une fréquence dépendant d'une vitesse estimée du dispositif.

6. Dispositif selon l'une des revendications 3 à 5, dans lequel le traqueur (16) est agencé pour ajuster la fréquence de suivi actif lorsque des données de signalisation concernant un identifiant de dispositif mobile sélectionné par le trieur (14) sont reçues entre deux occurrences de suivi actif.

7. Procédé de géolocalisation pour réaliser un gardiennage virtuel des dispositifs mobiles de communications **caractérisé en ce qu'**il comprend :
a) recevoir des données de signalisation associant au moins un identifiant de dispositif mobile de communication (6) et un identifiant de signalisation désignant une cellule de localisation,
b) déterminer si des données de signalisations reçues désignent une cellule de localisation appartenant à une liste de cellules de localisation voisines d'une cellule de localisation cible, situées à une distance choisie de la cellule de localisation cible, la distance choisie étant définie de manière métrique ou en fonction de la topologie du réseau de cellules,
c) en réponse à une détermination positive à l'étape b), réaliser un suivi actif de cellule de localisation de chacun des au moins un dispositif mobile de communication (9) dont l'identifiant de dispositif mobile est associé aux données de localisation concernées.

8. Procédé selon la revendication 7, dans lequel la liste de cellules de localisation voisines comprend uniquement des cellules appartenant à la même zone de localisation ou la même zone de routage que la cellule de localisation cible.

## Patentansprüche

1. Geolokalisierungsvorrichtung zum Durchführen von Geofencing mobiler Kommunikationsvorrichtungen, Folgendes umfassend:
einen Querier (10), der angeordnet ist, um Signalisierungsdaten zu erhalten, die Kennungen einer mobilen Kommunikationsvorrichtung (6) und Signalisierungskennungen verknüpfen, wobei mindestens bestimmte der Signalisierungskennungen eine Lokalisierungszelle bezeichnen,
einen Selektor (12), der angeordnet ist, um eine Liste benachbarter Lokalisierungszellen einer Ziel-Lokalisierungszelle ausgehend von der Gesamtheit der Zellen zu bestimmen, die sich in einem ausgewählten Abstand zu der Ziel-Lokalisierungszelle befinden, wobei der ausgewählte Abstand auf metrische Art oder in Abhängigkeit von der Topologie des Zellennetzwerks definiert wird,
einen Sortierer (14), der angeordnet ist, um in den Daten des Queriers (10) mindestens eine Kennung einer mobilen Kommunikationsvorrichtung (9) auszuwählen, die als mit einer Signalisierungskennung hinsichtlich einer Lokalisierungszelle verknüpft detektiert wird, die der Liste benachbarter Lokalisierungszellen angehört, die durch den Selektor (12) bestimmt wird, und
einen Tracker (16), der angeordnet ist, um eine aktive Überwachung einer Lokalisierungszelle jeder der mindestens einen mobilen Kommunikationsvorrichtung (9) auszulösen, deren mobile Vorrichtungskennung durch den Sortierer (14) ausgewählt worden ist.

2. Vorrichtung nach Anspruch 1, wobei der Selektor (12) angeordnet ist, um die Liste benachbarter Lokalisierungszellen aus der Gesamtheit der Zellen zu bestimmen, die derselben Lokalisierungszone oder derselben Routing-Zone angehören, wie die Ziel-Lokalisierungszelle.

3. Vorrichtung nach einem der vorstehenden Ansprüche, wobei der Tracker (16) angeordnet ist, um eine aktive Überwachung einer Lokalisierungszelle einer mobilen Kommunikationsvorrichtung (9) durchzuführen, deren mobile Vorrichtungskennung durch den Sortierer (14) entsprechend einer Frequenz ausgewählt worden ist, die von dem Abstand zwischen einer laufenden Lokalisierungszelle und der Ziel-Lokalisierungszelle abhängig ist.

4. Vorrichtung nach Anspruch 3, wobei der Tracker (16) weiter angeordnet ist, um die Frequenz einer aktiven Überwachung in Abhängigkeit von einer geschätzten Geschwindigkeit der Vorrichtung anzupassen.

5. Vorrichtung nach Anspruch 1 oder 2, wobei der Tracker (16) angeordnet ist, um eine aktive Überwachung einer Lokalisierungszelle einer mobilen Kommunikationsvorrichtung (6) durchzuführen, deren mobile Vorrichtungskennung durch den Sortierer (14) entsprechend einer Frequenz ausgewählt worden ist, die von einer geschätzten Geschwindigkeit der Vorrichtung abhängig ist.

6. Vorrichtung nach einem der Ansprüche 3 bis 5, wobei der Tracker (16) angeordnet ist, um die Frequenz einer aktiven Überwachung anzupassen, wenn die Signalisierungsdaten hinsichtlich einer durch den Sortierer (14) ausgewählten mobilen Vorrichtungskennung zwischen zwei Fällen einer aktiven Überwachung empfangen werden.

7. Geolokalisierungsverfahren zum Durchführen von Geofencing mobiler Kommunikationsvorrichtungen, **dadurch gekennzeichnet, dass** es Folgendes umfasst:
a) Empfangen von Signalisierungsdaten, die mindestens eine Kennung einer mobilen Kommunikationsvorrichtung (6) und eine Signalisierungskennung verknüpfen, die eine Lokalisierungszelle bezeichnen,
b) Bestimmen, ob die empfangenen Signalisierungsdaten eine Lokalisierungszelle bezeichnen, die einer Liste benachbarter Lokalisierungszellen einer Ziel-Lokalisierungszelle angehören, die sich in einem ausgewählten Abstand zu der Ziel-Lokalisierungszelle befinden, wobei der ausgewählte Abstand auf metrische Art oder in Abhängigkeit von der Topologie des Zellennetzwerks definiert wird,
c) als Reaktion auf eine positive Bestimmung im Schritt b) Durchführen einer aktiven Überwachung einer Lokalisierungszelle jeder der mindestens einen mobilen Kommunikationsvorrichtung (9), deren mobile Vorrichtungskennung mit den betroffenen Lokalisierungsdaten verknüpft ist.

8. Verfahren nach Anspruch 7, wobei die Liste benachbarter Lokalisierungszellen nur Zellen umfasst, die derselben Lokalisierungszone oder derselben Routing-Zone wie die Ziel-Lokalisierungszelle angehören.

## Claims

1. A geolocation device to provide geofencing of the mobile communication devices, comprising:
a requester (10) arranged to obtain signaling data associating identifiers of mobile communication devices (6) and signaling identifiers, at least some of the signaling identifiers designating a location cell,
a selector (12) arranged to determine a list of location cells neighboring a target location cell, based on the set of cells situated at a chosen distance from the target location cell, the chosen distance being defined in a metric manner or on the basis of the topology of the cellular network,
a sorter (14) arranged to select from the requester's data (10) at least one mobile communication device identifier (9) detected as being associated with a signaling identifier relating to a location cell belonging to the list of neighboring location cells determined by the selector (12), and
a tracker (16) arranged to launch active location cell monitoring of each of the at least one mobile communication device (9) whose mobile device identifier has been selected by the sorter (14).

2. The device as claimed in claim 1, wherein the selector (12) is arranged to determine the list of neighboring location cells on the basis of the set of cells belonging to the same location area or the same routing area as the target location cell.

3. The device as claimed in any of the preceding claims, wherein the tracker (16) is arranged to perform active location cell monitoring of a mobile communication device (9) whose mobile device identifier has been selected by the sorter (14) at a frequency depending on the distance between a current location cell and the target location cell.

4. The device as claimed in claim 3, wherein the tracker (16) is also arranged to adjust the active monitoring frequency on the basis of an estimated speed of the device.

5. The device as claimed in claim 1 or 2, wherein the tracker (16) is arranged to perform active location cell monitoring of a mobile communication device (6) whose mobile device identifier has been selected by the sorter (14) according to a frequency depending on an estimated speed of the device.

6. The device as claimed in any of claims 3 to 5, wherein the tracker (16) is arranged to adjust the active monitoring frequency when signaling data relating to a mobile device identifier selected by the sorter (14) are received between two occurrences of active monitoring.

7. A geolocation method to provide geofencing of the mobile communication devices, **characterized in that** it includes:
a) receiving signaling data associating at least one identifier of a mobile communication device (6) and a signaling identifier designating a location cell,
b) determining whether received signaling data designate a location cell belonging to a list of location cells neighboring a target location cell and situated at a chosen distance from the target location cell, the chosen distance being defined in a metric manner or on the basis of the topology of the cellular network,
c) in response to a positive determination in step b), providing active location cell monitoring of each of the at least one mobile communication device (9) whose mobile device identifier is associated with the location data concerned.

8. The method as claimed in claim 7, wherein the list of neighboring location cells comprises solely cells belonging to the same location area or the same routing area as the target location cell.
